# EUROPÄISCHE PATENTANMELDUNG

(11) **EP 4 312 137 A1**
(43) Veröffentlichungstag der Anmeldung: **31.01.2024**
(21) Anmeldenummer: 22187513.1
(22) Anmeldetag: 28.07.2022
(51) Int. Cl.: G06F 21/51, G06F 21/57, G06F 21/62, G06F 11/30, H04L 9/40

(54) **BERECHTIGUNG ZU EINEM INSTALLIEREN UND/ODER EINEM STARTEN EINES ZWEITEN ANWENDUNGSPROGRAMMS**

(71) Anmelder: Siemens Aktiengesellschaft, 80333 München (DE)
(72) Erfinder: Falk, Rainer, 85586 Poing (DE); Feist, Christian Peter, 80689 München (DE); Pfau, Axel, 79117 Freiburg (DE); Pyka, Stefan, 85570 Markt Schwaben (DE); Schneider, Daniel, 80796 München (DE); Sperl, Franz, 92526 Oberviechtach (DE)
(74) Vertreter: Siemens Patent Attorneys

(57) **Zusammenfassung**

Die Erfindung betrifft eine Überwachungseinheit (AM) für ein technisches System (G), aufweisend:
- eine Empfangseinheit, ausgebildet mindestens eine erste sicherheitsrelevante Eigenschaft eines ersten Anwendungsprogramms (A1) des technischen Systems (G) zu empfangen (C),
- eine Berechtigungseinheit, ausgebildet einem zweiten Anwendungsprogramm (A2) mindestens eine Berechtigung in Abhängigkeit der ersten sicherheitsrelevanten Eigenschaft zuzuordnen (S), wobei die mindestens eine Berechtigung zu einem Installieren und/oder einem Starten des zweiten Anwendungsprogramms (A2) auf dem technischen System (G) berechtigt.

Außerdem betrifft die Erfindung ein zugehöriges Gerät, Verfahren und Computerprogrammprodukt.

## Beschreibung

### HINTERGRUND DER ERFINDUNG

### Gebiet der Erfindung

Die vorliegende Erfindung betrifft eine Überwachungseinheit für ein technisches System. Die Erfindung betrifft außerdem ein zugehöriges Gerät, Verfahren und Computerprogrammprodukt.

### Beschreibung des Stands der Technik

Um industriellen Geräten eine flexible Funktionalität zu ermöglichen, unterstützen diese insbesondere die Verwendung von nachladbaren Applikationen, auch als Apps und/oder Anwendungsprogramme und/oder Benutzerprogramme bezeichenbar. Durch Anwendungsprogramme kann die Funktionalität von industriellen Geräten auch im Feld durch einen Betreiber erweitert oder angepasst werden. Auch ist es möglich, durch eine App ein virtualisiertes industrielles Gerät, insbesondere eine virtualisierte speicherprogrammierbare Steuerung vPLC, auf einer generischen Compute-Plattform wie insbesondere einem Industrie-PC (IPC) oder einem Edge-Server zu realisieren.

Durch die zunehmende Vernetzung industrieller Geräte ist eine erhöhte Angriffsfläche für Manipulationen von bestehender Software, darunter die Anwendungsprograme, vorhanden. Zusätzlich entsteht durch die Möglichkeit nachladbarer Apps ein zusätzliches Sicherheitsrisiko für das Gerät, auf welchem die App installiert ist und gegebenenfalls auch für mit dem Gerät verbundene weitere Geräte.

Eine App benötigt abhängig von ihrer Funktionalität unterschiedliche Berechtigungen, insbesondere bezüglich eines Zugriffes auf Schnittstellen und/oder eines Zugriffs auf bestimmte Dateien.

Insbesondere wenn eine App von einem Drittanbieter zur Verfügung gestellt wird und diesem nicht uneingeschränkt vertraut wird, besteht eine erhöhte Gefahr, dass das Gerät durch diese App kompromittiert wird. Je mehr Berechtigungen die App hat, desto höher ist die Gefahr einer Kompromittierung, die durch diese App ausgeht, wenn keine geeigneten Schutzmaßnahmen realisiert werden.

Entscheidungen, ob eine App auf einem Gerät installiert und ausgeführt werden kann, basieren standardmäßig auf dem Anbieter der App oder dem App-Store, von dem sie geladen wurde, oder auf den durch die App geforderten Berechtigungen.

Bekannt ist bei Android der Service SafetyNet von Google, der bei Android Anwendung findet. Durch eine SafteyNet-Überprüfung wird ein Android Gerät überprüft, ob sich dessen Hardware und Software in einem sicheren und nicht veränderten Status befindet (als Compatibility Test Suite (CTS)-kompatibel bezeichnet). Apps können so entwickelt werden, dass sie im App Store (Play Store) nur dann von einem Android-Gerät gefunden und somit installiert werden können, wenn das Gerät CTS-kompatibel ist (beispielsweise wichtig für Banking-Apps). Dadurch ist sichergestellt, dass sich das Gerät zur Zeit der Überprüfung in einem, von Google definierten, ausreichend sicheren Zustand befindet.

Auch können bereits installierte Apps eine Attestierung des aktuellen Zustandes des Gerätes abfragen (eine Internetverbindung für die Verbindung mit einem Google Attestation API Backend ist hierbei nötig), um beispielsweise abhängig von dieser Attestierung, und mit Hilfe von Referenzdaten, App-Funktionen zu deaktivieren.

Die Aufgabe der Erfindung besteht darin, eine Lösung für verbesserte Sicherheitsmaßnahmen für industrielle Geräte, welche die Verwendungen von nachladbaren Apps erlauben, bereitzustellen, um die Sicherheit der Geräte zu gewährleisten.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft eine Überwachungseinheit für ein technisches System,
aufweisend:
- eine Empfangseinheit, ausgebildet mindestens eine erste sicherheitsrelevante Eigenschaft eines ersten Anwendungsprogramms des technischen Systems zu empfangen,
- eine Berechtigungseinheit, ausgebildet einem zweiten Anwendungsprogramm mindestens eine Berechtigung in Abhängigkeit der ersten sicherheitsrelevanten Eigenschaft zuzuordnen, wobei die mindestens eine Berechtigung zu einem Installieren und/oder einem Starten des zweiten Anwendungsprogramms auf dem technischen System berechtigt.

Die erfindungsgemäße Überwachungseinheit ist auch als eine vertrauenswürdige Instanz und/oder ein App Monitor bezeichenbar.

Das technische System ist insbesondere als ein technisches Gerät ausgebildet.

Die sicherheitsrelevante Eigenschaft ist im Sinne der Erfindung ist eine Eigenschaft, durch welche die Integrität des technischen Systems erhöht ist.

Die mindestens eine Berechtigung ist insbesondere als mindestens eine sicherheitsrelevante Berechtigung ausgebildet. Die Berechtigung ist auch als Privileg oder Handlungserlaubnis oder Handlungsbefähigung bezeichenbar.

Die Integrität der Überwachungseinheit, auch als App Monitor bezeichenbar, inklusive der durch die Berechtigungseinheit zugeordneten Berechtigung, auch als eine App Policy bezeichenbar, ist dabei idealerweise durch bekannte Methoden, insbesondere mittels Secure Boot, geschützt.

Insbesondere ist die Empfangseinheit, zusätzlich zu einem Empfangen, dazu ausgebildet die mindestens eine erste sicherheitsrelevante Eigenschaft einzulesen und/oder abzurufen und/oder abzufragen und/oder ein automatisiertes Empfangen in vordefinierten zeitlichen Abständen einzuleiten.

Die mindestens eine Berechtigung ist auch als mindestens ein Privileg bezeichenbar.

Ein Aspekt der Erfindung besteht darin, eine Lösung bereitzustellen, die es ermöglicht, Berechtigungen für Anwendungsprogramme auf Basis des aktuellen Sicherheitszustandes, welcher von bisher vorhandenen Anwendungsprogrammen des technischen Geräts abhängt, zu ermöglichen.

Erfindungsgemäß darf auf einem technischen Gerät das zweite Anwendungsprogramm, insbesondere eine zu installierende App, abhängig davon installiert und/oder gestartet werden, welches erste Anwendungsprogramm, insbesondere welche andere oder bisherige App, auf dem Gerät aktuell installiert ist und/oder aktuell ausgeführt wird und zusätzlich abhängig davon, welche sicherheitsrelevante Eigenschaft diese aktuell laufende App hat. Als sicherheitsrelevante Eigenschaft gilt im Sinne der Erfindung insbesondere eine aktuelle Berechtigung oder Konfiguration des ersten Anwendungsprogramms.

Die Erfindung hat unter anderem den Vorteil, dass die Installation oder das Starten von weniger vertrauenswürdigen zu installierenden Apps dadurch nicht pauschal verboten werden muss, sondern nur dann verboten/verhindert wird, wenn insbesondere eine bisherige App mit Know-How-Schutz-Funktionalität installiert ist oder ausgeführt wird.

Dies hat speziell gegenüber dem aktuellen Stand der Technik den Vorteil, dass der aktuelle Zustand des Geräts, bzw. die aktuell laufenden Apps berücksichtigt werden. Darauf basierend hat die Erfindung den Vorteil, die Berechtigungen des zweiten Anwendungsprogramms zur Installation, beim Starten oder zur Laufzeit und abhängig vom aktuellen Zustand des Geräts anzupassen.

Ein Vorteil der beschriebenen Erfindung ist somit die flexible Anpassung von App-Berechtigungen abhängig vom aktuellen Zustand des Geräts. Dadurch kann sichergestellt werden, dass eine weniger vertrauenswürdige App zwar in einem bestimmten Gerätezustand gestartet werden kann, diese allerdings keinen Zugriff auf andere Apps mit möglicherweise sensitiven Kundendaten bietet.

Auch kann die Installation und das Starten von weniger vertrauenswürdigen Apps durch die beschriebene Erfindung in einem bestimmten Gerätezustand (abhängig von den aktuell laufenden Apps) nicht erlaubt werden. Insbesondere kann die weniger vertrauenswürdige App nur gestartet werden, wenn aktuell keine App mit sensitiven Kundendaten läuft.

Durch die beschriebene Erfindung wird somit erreicht, dass eine möglicherweise benötigte, aber weniger vertrauenswürdige App, in einem bestimmten Gerätezustand verwendet werden kann, sich jedoch die Sicherheit des Geräts nicht verringert.

In einer Variante wird insbesondere verhindert werden, dass kritische weitere Apps (zweites Anwendungsprogramm), insbesondere für Debugging oder Diagnose, gestartet werden, während eine sicherheitsrelevante App (erstes Anwendungsprogramm) ausgeführt wird. Dadurch kann verhindert oder erschwert werden, dass kritische Apps mit weitreichenden Zugriffsrechten und Funktionalitäten für Angriffe gegen sicherheitsrelevante Apps verwendet werden.

Neben der ersten sicherheitsrelevanten Eigenschaft des ersten Anwendungsprogramms werden insbesondere auch Auswirkungen, der jeweils von den Apps gedachten Funktionen auf den Gesamtprozess berücksichtigt werden, wie es bereits bisher notwendig ist. Dies ist notwendig, damit es nicht zu unbeabsichtigten Fehlfunktionen bei den für die CPU-gedachten Prozessen kommen kann.

In einer Weiterbildung der Erfindung ist die Berechtigungseinheit außerdem ausgebildet, die Berechtigung in Abhängigkeit von einem Zustand des ersten Anwendungsprogramms des technischen Systems zuzuordnen.

Der Zustand ist dem ersten Anwendungsprogramm temporär zugeordnet und gibt Aussage darüber, ob eine App, das erste Anwendungsprogramm, aktiv oder inaktiv ist. Die mindestens eine sicherheitsrelevante Eigenschaft des ersten Anwendungsprogramms ist hingegen eine dauerhafte Eigenschaft. Allerdings kann die mindestens eine sicherheitsrelevante Eigenschaft des ersten Anwendungsprogramms nur zum Ausdruck kommen und/oder präsent sein, wenn sich das erste Anwendungsprogramm in einem aktiven Zustand befindet.

In einer weiteren Weiterbildung der Erfindung umfasst der Zustand:
- Eine Installation des ersten Anwendungsprogramms und/oder
- eine Ausführung des ersten Anwendungsprogramms und/oder
- einen Ausführungsmodus des ersten Anwendungsprogramms und/oder
- die mindestens eine Berechtigung des ersten Anwendungsprogramms.

Der Zustand umfasst, somit insbesondere, ob das erste Anwendungsprogramm auf dem technischen System installiert ist und/oder ob das erste Anwendungsprogramm auf dem technischen System läuft und/oder aktiv ist.

Der Ausführungsmodus umfasst insbesondere unterschiedliche Berechtigungen/Privilegien.

In einer weiteren Weiterbildung der Erfindung ist die Berechtigungseinheit außerdem ausgebildet, die Berechtigung in Abhängigkeit von mindestens einer zweiten sicherheitsrelevanten Eigenschaft des zweiten Anwendungsprogramms zu setzen. Nach dieser Ausführungsform fließt auch mindestens eine zweite sicherheitsrelevante Eigenschaft des zweiten Anwendungsprogramms in das Setzen der Berechtigung ein. Dies ist von Vorteil, da so auch Eigenschaften des zweiten Anwendungsprogramms berücksichtigt werden.

In einer weiteren Weiterbildung der Erfindung ist die Berechtigungseinheit außerdem ausgebildet, die Berechtigung in Abhängigkeit von einer Benutzereingabe zu setzen. Die Benutzereingabe ist insbesondere als eine Eingabe eines geschulten Bedienpersonals und/oder eine Eingabe eines Anwendungsexperten ausgebildet. Dies ist von Vorteil, da so in das Setzen der Berechtigung ein weiterer Faktor einfließt.

In einer weiteren Weiterbildung der Erfindung ist die Berechtigungseinheit außerdem ausgebildet, die mindestens eine Berechtigung in Abhängigkeit von mindestens einer Richtline zu setzen, wobei die mindestens eine Richtlinie von der mindestens einen ersten sicherheitsrelevanten Eigenschaft abhängt.

Hierbei bedeutet, dass die mindestens eine Richtlinie von der ersten sicherheitsrelevanten Eigenschaft abhängt, dass die Richtlinie Entscheidungen definiert, welche auf einer Ausprägung der ersten sicherheitsrelevanten Eigenschaft basiert. Bezogen auf die mindestens eine erste sicherheitsrelevante Eigenschaft sind somit insbesondere die Richtlinien festgelegt.

Für die Entscheidung, ob eine App installiert und/oder gestartet werden darf und für die Bestimmung der App-Berechtigungen, hat die Überwachungseinheit, auch als App Monitor bezeichenbar, somit Zugriff auf mindestens eine Richtlinie, auch als App Policy bezeichenbar, die Regeln für eine Entscheidungen bezüglich der mindestens einen Berechtigung beinhaltet.

In einer weiteren Weiterbildung der Erfindung ist die Empfangseinheit ausgebildet, die mindestens eine erste sicherheitsrelevante Eigenschaft des ersten Anwendungsprogramms des technischen Systems während der Laufzeit des zweiten Anwendungsprogramms zu empfangen.

Dies ist insbesondere von Vorteil, wenn (zu installierende) Apps eine sich zur Laufzeit ändernde Berechtigung haben sollen. Die Überprüfung und das Empfangen der mindestens einen sicherheitsrelevanten Eigenschaft der Apps kann dabei bei dem Start oder Stopp einer App erfolgen. Zusätzlich kann die Überprüfung und das Empfangen auch zu fest definierten oder zufällig gewählten zeitlichen Abständen zur Laufzeit erfolgen.

In einer weiteren Weiterbildung der Erfindung ist die Berechtigungseinheit außerdem ausgebildet, die Berechtigung während einer Laufzeit:
- des ersten Anwendungsprogramms und/oder
- des zweiten Anwendungsprogramms anzupassen.

Anzupassen bedeutet, dass eine aktuelle Berechtigung mit einer neuen Berechtigung überschrieben wird, die aktuelle Berechtigung wird somit gelöscht und die neue Berechtigung tritt an deren Stelle.

Dadurch kann berücksichtigt werden, dass sich die gleichzeitige Nutzung von unterschiedlichen Apps ausschließt, insbesondere ein gleichzeitiger Remote-Zugriff für Diagnose und Hochlauf einer Steuerungs-App.

Alternativ oder zusätzlich wird eine Berechtigung des ersten Anwendungsprogramms durch die Überwachungseinheit, auch als den App Monitor bezeichenbar, aufgrund des eben installierten und nun laufenden zweiten Anwendungsprogramms (und anderer laufender Apps) gesetzt, auch als bestimmt und zugeordnet bezeichenbar.

Wird eine neue App (zweites Anwendungsprogramm) gestartet, kann der App Monitor somit auch die zuvor bereits bestimmten Berechtigungen einer laufenden App (erstes Anwendungsprogramm), aufgrund der sicherheitsrelevanten Eigenschaft der neu gestarteten App (zweites Anwendungsprogramm), anpassen.

Dies kann insbesondere dazu verwendet werden, dass eine zweite App mit Know-How-Schutz-Funktionalität, insbesondere einer Arbeitsspeicherverschlüsselung oder einem Lizensierungsschutz von Projektierungsdaten, beendet oder temporär deinstalliert wird, wenn eine Debugging-App, als erstes Anwendungsprogramm, installiert oder gestartet wird.

In einer weiteren Weiterbildung der Erfindung umfasst die mindestens eine erste sicherheitsrelevante Eigenschaft des ersten Anwendungsprogramms:
- Eine vorhandene Berechtigung des ersten Anwendungsprogramms und/oder
- eine Konfiguration des ersten Anwendungsprogramms und/oder
- eine Herkunft des ersten Anwendungsprogramms und/oder
- eine Zugriffsmöglichkeit und/oder eine Verwendung von sensiblen Daten durch das erste Anwendungsprogramm und/oder
- eine Funktionalität des ersten Anwendungsprogramms und/oder
- eine Know-How-Schutz Funktionalität des ersten Anwendungsprogramms und/oder
- eine Arbeitsspeicherverschlüsselungsfunktionalität des ersten Anwendungsprogramms und/oder
- eine Lizensierungsschutzfunktionalität des ersten Anwendungsprogramms.

Die genannte Herkunft des ersten Anwendungsprogramms ist insbesondere von einem Anbieter/Herausgeber und/oder einem Lade-Server/App-Store des ersten Anwendungsprogramms ableitbar.

Die genannten sensibel Daten sind insbesondere auch als bestimmte oder sicherheitskritische Daten bezeichenbar.

Die erste sicherheitsrelevante Eigenschaft des ersten Anwendungsprogramms, in dessen Abhängigkeit die mindestens eine Berechtigung zugeordnet wird, kann einmalig vor der Nutzung des technischen Systems für die Überwachungseinheit definiert sein. In einer anderen Variante kann die erste sicherheitsrelevante Eigenschaft und damit auch die App Policy im Feld durch berechtigte Instanzen und/oder Personen ein Update erhalten, insbesondere über ein Gerätemanagementsystem, eine Web UI, etc.

In einer Variante kann der App Monitor die App Policy selbst anpassen, falls ein bestimmtes Ereignis auf dem Gerät auftritt, insbesondere Tamper Detektion.

In einer weiteren Weiterbildung der Erfindung umfasst die mindestens eine Berechtigung außerdem:
- Eine Debugging-Funktionalität des zweiten Anwendungsprogramms und/oder
- ein Zugriff auf sensible Daten des technischen Systems und/oder
- eine Ausgabe von Steuerbefehlen durch das zweite Anwendungsprogramm und/oder
- ein Zugriff auf eine von einem weiteren Anwendungsprogramm bereitgestellte Funktion.

Die genannten sensiblen Daten sind insbesondere auch als bestimmte oder sicherheitskritische Daten bezeichenbar.

Die genannten von anderen Anwendungsprogrammen bereitgestellte Funktionen sind insbesondere als GPS, Kamera, etc. ausgebildet.

Zusätzlich und optional werden erfindungsgemäß auf einem Gerät zu installierenden Apps Berechtigungen/Privilegien zugeordnet, die generell abhängig von den auf dem Gerät aktuell laufenden anderen Apps sind.

Falls die App gestartet werden kann, bestimmt der App Monitor insbesondere auch weitere Berechtigungen der gestarteten App. Auch diese Entscheidung basiert auf den sicherheitsrelevanten Eigenschaften der aktuell laufenden Apps.

Insbesondere ist es somit möglich, dass ein Installieren oder Starten der Debugging-App (zweites Anwendungsprogramm) gesperrt wird, solange ein erstes Anwendungsprogramm mit Know-How-Schutz-Funktionalität installiert ist oder ausgeführt (Zustand des ersten Anwendungsprogramms) wird.

In einer weiteren Weiterbildung der Erfindung weist die Überwachungseinheit außerdem auf:
- Eine Ausgabeeinheit, ausgebildet eine Warnausgabe in Abhängigkeit von:
   o Der mindestens einen ersten sicherheitsrelevanten Eigenschaft und/oder
   o der mindestens einen Berechtigung des zweiten Anwendungsprogramms
      auszugeben.

Die Ausgabeeinheit kann insbesondere als eine Warneinheit oder eine Steuereinheit bezeichnet werden.

Die durch die Überwachungseinheit und die Berechtigungseinheit ermittelten Berechtigungen und daraus bestehenden Entscheidungen können entweder direkt durch die Überwachungseinheit umgesetzt werden. Alternativ wird dem Anwender eine Warnmeldung und insbesondere eine Handlungsempfehlung bereitgestellt. Der Anwender kann daraufhin weitere Schritte selbst ausführt (insbesondere eine Festlegung der App-Berechtigungen oder ein Stoppen von Apps).

Als Erweiterung kann der App Monitor auch eine (signierte) Attestierung des aktuellen Zustands (abhängig von den aktuell laufenden Apps) bereitstellen. Diese kann eine Aussage über die aktuelle Vertrauenswürdigkeit des Geräts ermöglichen.

In einer weiteren Weiterbildung der Erfindung umfasst die Warnausgabe:
- eine Handlungsempfehlung bezogen auf das erste Anwendungsprogramm und/oder
- einen Signalton oder
- eine Signalleuchte und/oder
- eine Benachrichtigung einer weiteren Instanz und/oder
- ein Steuersignal an eine weitere Instanz für ein Stoppen und/oder ein Deinstallieren mindestens eines weiteren Anwendungsprogramms.

Möglich ist somit auch eine für den Anwender bereitgestellte Warnmeldungen auszugeben, möglicherweise mit einer Handlungsempfehlung, insbesondere durch Richtlinien, auch als Regeln bezeichenbar, für Entscheidungen, wobei die Richtlinien von der mindestens einen ersten sicherheitsrelevanten Eigenschaft abhängen. Die Handlungsempfehlung umfasst insbesondere, dass eine bestimmte App aufgrund des Starts einer neuen App gestoppt und/oder deinstalliert werden soll.

Die Erfindung umfasst außerdem ein Gerät aufweisend eine erfindungsgemäße Überwachungseinheit.

In einer Weiterbildung der Erfindung ist das Gerät ausgebildet als:
- Ein industrielles Gerät und/oder
- eine virtualisierte speicherprogrammierbare Steuerung (vPLC), auf einer generischen Compute-Plattform wie insbesondere einem Industrie-PC (IPC) oder einem Edge-Server.

Die Erfindung umfasst außerdem ein Verfahren zum Zuordnen mindestens einer Berechtigung zu einem zweiten Anwendungsprogramm,
mit den Schritten:
- Ein Empfangen von mindestens einer ersten sicherheitsrelevanten Eigenschaft eines ersten Anwendungsprogramms eines technischen Systems, und
- Ein Zuordnen der mindestens einen Berechtigung in Abhängigkeit der ersten sicherheitsrelevanten Eigenschaft zu dem zweiten Anwendungsprogramm, wobei die mindestens eine Berechtigung zu einem Installieren und/oder einem Starten des zweiten Anwendungsprogramms auf dem technischen System berechtigt.

Die Erfindung umfasst außerdem ein Computerprogrammprodukt, umfassend ein Computerprogramm, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen
- Fig. 1: eine schematische Darstellung eines industriellen Gerätes und
- Fig. 2: ein Ablaufdiagramm des erfindungsgemäßen Verfahrens.

### DETAILLIERTE BESCHREIBUNG DER ERFINDUNG

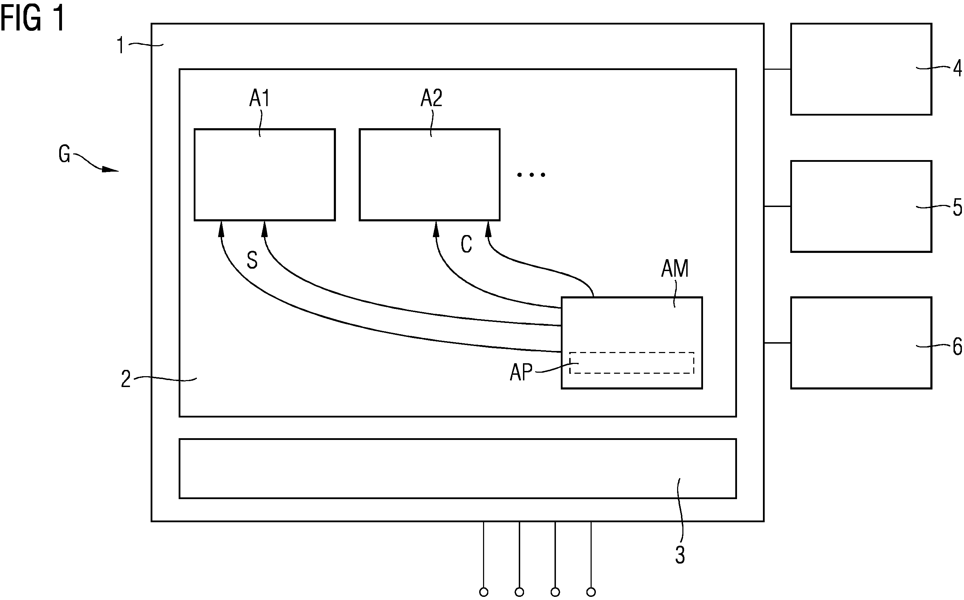

Fig. 1 zeigt eine schematische Darstellung eines technischen Systems G, insbesondere eines industriellen Gerätes G. Das Gerät weist eine CPU 1, einen Benutzerraum 2, einen OS-Kernel 3, eine RAM-Speichereinheit 4, eine Flash-Speichereinheit 5 und einen ASIC 6 auf. Im Benutzerraum 2, auch als User-Space 2 bezeichenbar, befindet sich ein erstes Anwendungsprogramm A1, ein zweites Anwendungsprogramm A2, eine Überwachungseinheit AM, auch als App Monitor AM bezeichenbar, und ein der Überwachungseinheit zugeordnetes Regelwerk AP, auch als App Policy AP bezeichenbar. Das erste Anwendungsprogramm AI ist auch als erste App bezeichenbar. Das zweite Anwendungsprogramm A2 ist auch als zweite App bezeichenbar.

Die Überwachungseinheit AM, auch als eine vertrauenswürdige Instanz AM und/oder ein App Monitor AM bezeichenbar, prüft sicherheitsrelevante Eigenschaften der ersten App. Es findet ein Prüfen C, auch als Check C bezeichenbar, statt. Darauf basieren entscheidet die Überwachungseinheit AM, optional unter Hinzunahme eines geschulten Bedienpersonals, ob die zweite App A2 installiert und/oder gestartet werden darf.

Falls die App A2 gestartet werden kann, bestimmt der App Monitor AM insbesondere auch die Berechtigungen der gestarteten App A2. Es winden ein Setzten S von Berechtigungen statt. Auch diese Entscheidung basiert auf den Eigenschaften der aktuell laufenden Apps A1.

In Fig. 1 unten werden also insbesondere die Berechtigungen der eben installierten und gestarteten App A2 aufgrund von der bereits zuvor laufenden App A1 (und anderer laufender Apps) bestimmt und zugeordnet. Alternativ oder zusätzlich werden die Berechtigungen der App A1 durch den App Monitor AM aufgrund von der eben installierten und nun laufenden App A2 (und anderer laufender Apps) bestimmt und zugeordnet.

Werden neue Apps A2 gestartet, kann der App Monitor AM somit auch die zuvor bereits bestimmten Berechtigungen der laufenden Apps, aufgrund der Eigenschaften der neu gestarteten App, anpassen (Setzten S).

Die Regeln der App Policy AP kann dabei eine Vielzahl von unterschiedlichen Kriterien beinhalten, anhand derer der App Monitor AM seine Entscheidungen trifft. Nachfolgend sind einige mögliche Regeln der App Policy AP aufgelistet. Dabei kann eine beliebige Kombination der Entscheidungskriterien umgesetzt sein. Die Entscheidungen sind dabei beispielsweise abhängig:
- von wem die aktuell laufenden Apps sind (z.B. können Apps von Drittherstellern als weniger vertrauenswürdig eingestuft werden).
- von aktuell laufenden Kunden-Apps die möglicherweise sensitiven Daten verwenden (eine Remote-Service-App darf somit beispielsweise nicht gleichzeitig installiert und ausgeführt werden).
- von den Berechtigungen der aktuell laufenden Apps (z.B. nutzt eine der Apps eine kritische I/O-Schnittstelle zu einem Secure Element).
- von einer oder mehreren aktuell laufenden bestimmten (kritischen) App. Es kann keine App oder keine App mit gewissen Eigenschaften gestartet werden.

Zusätzlich können Umgebungseigenschaften laufender Anwendungsprogramme einbezogen werden:
- von der aktuellen Security Domäne (insbesondere SELinux oder Mandatory Access Control), in der die aktuellen Apps laufen.
- von der aktuellen Anzahl oder Identität von laufenden Apps.
- ob das Binary einer App mit bestimmten Compiler-Flags kompiliert wurde (insbesondere relevante Security Compiler-Flags).

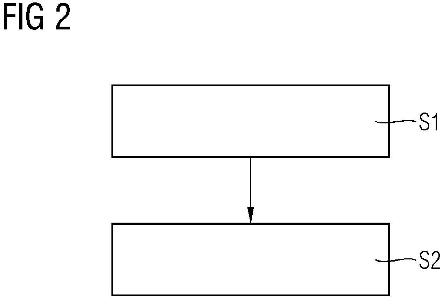

Fig. 2 zeigt ein Ablaufdiagramm des erfindungsgemäßen Verfahrens zum Zuordnen mindestens einer Berechtigung zu einem zweiten Anwendungsprogramm,
mit den Schritten:
- Schritt S1: Ein Empfangen von mindestens einer ersten sicherheitsrelevanten Eigenschaft eines ersten Anwendungsprogramms eines technischen Systems, und
- Schritt S2: Ein Zuordnen der mindestens einen Berechtigung in Abhängigkeit der ersten sicherheitsrelevanten Eigenschaft zu dem zweiten Anwendungsprogramm, wobei die mindestens eine Berechtigung zu einem Installieren und/oder einem Starten des zweiten Anwendungsprogramms auf dem technischen System berechtigt.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Überwachungseinheit (AM) für ein technisches System (G), aufweisend:
- eine Empfangseinheit, ausgebildet mindestens eine erste sicherheitsrelevante Eigenschaft eines ersten Anwendungsprogramms (A1) des technischen Systems (G) zu empfangen (C),
- eine Berechtigungseinheit, ausgebildet einem zweiten Anwendungsprogramm (A2) mindestens eine Berechtigung in Abhängigkeit der ersten sicherheitsrelevanten Eigenschaft zuzuordnen (S), wobei die mindestens eine Berechtigung zu einem Installieren und/oder einem Starten des zweiten Anwendungsprogramms (A2) auf dem technischen System (G) berechtigt.

2. Überwachungseinheit (AM) ach Anspruch 1,
wobei die Berechtigungseinheit außerdem ausgebildet ist, die Berechtigung in Abhängigkeit von einem Zustand des ersten Anwendungsprogramms (A1) des technischen Systems (G) zuzuordnen.

3. Überwachungseinheit (AM) nach Anspruch 2,
wobei der Zustand umfasst:
- Eine Installation des ersten Anwendungsprogramms (A1) und/oder
- eine Ausführung des ersten Anwendungsprogramms (A1) und/oder
- einen Ausführungsmodus des ersten Anwendungsprogramms (A1) und/oder
- mindestens eine Berechtigung des ersten Anwendungsprogramms (A1).

4. Überwachungseinheit (AM) nach einem der vorhergehenden Ansprüche,
wobei die Berechtigungseinheit außerdem ausgebildet ist, die Berechtigung in Abhängigkeit von mindestens einer zweiten sicherheitsrelevanten Eigenschaft des zweiten Anwendungsprogramms (A2) zu setzen (S).

5. Überwachungseinheit (AM) nach einem der vorhergehenden Ansprüche,
wobei die Berechtigungseinheit außerdem ausgebildet ist, die Berechtigung in Abhängigkeit von einer Benutzereingabe zu setzen (S).

6. Überwachungseinheit (AM) nach einem der vorhergehenden Ansprüche,
wobei die Berechtigungseinheit außerdem ausgebildet ist, die mindestens eine Berechtigung in Abhängigkeit von mindestens einer Richtline (AP) zu setzen (S), wobei die mindestens eine Richtlinie (AP) von der mindestens einen ersten sicherheitsrelevanten Eigenschaft abhängt.

7. Überwachungseinheit (AM) nach einem der vorhergehenden Ansprüche,
wobei die Empfangseinheit ausgebildet ist, die mindestens eine erste sicherheitsrelevante Eigenschaft des ersten Anwendungsprogramms (A1) des technischen Systems (G) während der Laufzeit des zweiten Anwendungsprogramms (A2) zu empfangen.

8. Überwachungseinheit (AM) nach einem der vorhergehenden Ansprüche,
wobei die Berechtigungseinheit außerdem ausgebildet ist, die Berechtigung während einer Laufzeit:
- des ersten Anwendungsprogramms (A1) und/oder
- des zweiten Anwendungsprogramms (A2) anzupassen.

9. Überwachungseinheit (AM) nach einem der vorhergehenden Ansprüche,
wobei die mindestens eine erste sicherheitsrelevante Eigenschaft des ersten Anwendungsprogramms (A1) umfasst:
- Eine vorhandene Berechtigung des ersten Anwendungsprogramms (A1) und/oder
- eine Konfiguration des ersten Anwendungsprogramms (A1) und/oder
- eine Herkunft des ersten Anwendungsprogramms (A1) und/oder
- eine Zugriffsmöglichkeit auf und/oder eine Verwendung von sensiblen Daten durch das erste Anwendungsprogramm (A1) und/oder
- eine Funktionalität des ersten Anwendungsprogramms (A1) und/oder
- eine Know-How-Schutz Funktionalität des ersten Anwendungsprogramms (A1) und/oder
- eine Arbeitsspeicherverschlüsselungsfunktionalität des ersten Anwendungsprogramms (A1) und/oder
- eine Lizensierungsschutzfunktionalität des ersten Anwendungsprogramms (A1).

10. Überwachungseinheit (AM) nach einem der vorhergehenden Ansprüche,
wobei die mindestens eine Berechtigung außerdem umfasst:
- Eine Debugging-Funktionalität des zweiten Anwendungsprogramms (A2) und/oder
- ein Zugriff auf sensible Daten des technischen Systems (G) und/oder
- eine Ausgabe von Steuerbefehlen durch das zweite Anwendungsprogramm (A2) und/oder
- ein Zugriff auf eine von einem weiteren Anwendungsprogramm bereitgestellte Funktion.

11. Überwachungseinheit (AM) nach einem der vorhergehenden Ansprüche,
außerdem aufweisend:
- Eine Ausgabeeinheit, ausgebildet eine Warnausgabe in Abhängigkeit von:
o Der mindestens einen ersten sicherheitsrelevanten Eigenschaft und/oder
o der mindestens einen Berechtigung des zweiten Anwendungsprogramms (A2)
auszugeben.

12. Überwachungseinheit (AM) nach Anspruch 11,
wobei die Warnausgabe umfasst:
- eine Handlungsempfehlung bezogen auf das erste Anwendungsprogramm (A1) und/oder
- einen Signalton oder
- eine Signalleuchte und/oder
- eine Benachrichtigung einer weiteren Instanz und/oder
- ein Steuersignal an eine weitere Instanz für ein Stoppen und/oder ein Deinstallieren mindestens eines weiteren Anwendungsprogramms.

13. Gerät (G) aufweisend eine Überwachungseinheit (AM) nach einem der vorhergehenden Ansprüche.

14. Verfahren zum Zuordnen mindestens einer Berechtigung zu einem zweiten Anwendungsprogramm (A2),
mit den Schritten:
- Ein Empfangen von mindestens einer ersten sicherheitsrelevanten Eigenschaft eines ersten Anwendungsprogramms (A1) eines technischen Systems, und
- Ein Zuordnen (S) der mindestens einen Berechtigung in Abhängigkeit der ersten sicherheitsrelevanten Eigenschaft zu dem zweiten Anwendungsprogramm (A2), wobei die mindestens eine Berechtigung zu einem Installieren und/oder einem Starten des zweiten Anwendungsprogramms (A2) auf dem technischen System (G) berechtigt.

15. Computerprogrammprodukt, umfassend ein Computerprogramm, wobei das Computerprogramm in eine Speichereinrichtung einer Recheneinheit ladbar ist, wobei mit dem Computerprogramm die Schritte eines Verfahrens nach Anspruch 14 ausgeführt werden, wenn das Computerprogramm auf der Recheneinheit ausgeführt wird.
